# EUROPÄISCHE PATENTSCHRIFT

(11) **EP 0 385 379 B1**
(45) Veröffentlichungstag und Bekanntmachung des Hinweises auf die Patenterteilung: **21.06.1995**
(21) Anmeldenummer: 90103759.8
(22) Anmeldetag: 26.02.1990
(51) Int. Cl.: C07F 9/6558

(54) **Verfahren zur Abtrennung von Thiaminmonophosphat aus einer Lösung von Thiaminphosphaten**
Extractive procedure of thiamine monophosphate from a solution of thiamine phosphates
Procédé d'extraction d'un monophosphate de thiamine d'une solution de phosphates de thiamine

(30) Priorität: 02.03.1989 DE 3906632
(43) Veröffentlichungstag der Anmeldung: 05.09.1990
(73) Patentinhaber: BASF Aktiengesellschaft, 67063 Ludwigshafen (DE)
(72) Erfinder: Dobler, Walter, Dr., D-6900 Heidelberg (DE); Schul, Wolfgang, Dr., D-6700 Ludwigshafen (DE); Paust, Joachim, Dr., D-6708 Neuhofen (DE); Mitschker, Alfred, Dr., D-5068 Odenthal-Holz (DE)

(56) Entgegenhaltungen:
- BE-A- 548 447
- BE-A- 550 722
- CHEMICAL ABSTRACTS, Band 73, 19. Oktober 1970, Seite 229, Zusammenfassung Nr.80532v, Columbus, Ohio, US; F. SACCANI: "[Chromatographic] separation and determinatioan of pharmaceutical preparations ion-exchage resisins. I Vitamin B1 and its phosphate esters.", & BOLL. CHIM. FARM: 1970, 109(4), 271 4
- CHEMICAL ABSTRACTS, Band 68, 19. Februar 1968, Seite 3245, Zusammenfassung Nr.33248u, Columbus, Ohio, US; I. YOSHINORI et al.: "Separation and determinationof thiamine and thiamine phosphoric esters by ion-exchange resins",& BILAMIN 36(6), 544-7(1967)

## Beschreibung

Die Erfindung betrifft ein Verfahren zur Abtrennung von Thiaminmonophosphat aus einer Lösung von Thiaminphosphaten, die das Thiaminmonophosphat und Cocarboxylase als Wertprodukte enthält, wobei man einen Kationenaustauscher einsetzt und das Thiaminmonophosphat mit Säure eluiert.

Bei der Phosphorylierung von Thiamin wird in der Regel ein Gemisch der folgenden Zusammensetzung erhalten: etwa 70 % Thiaminmonophosphat, etwa 20 % Cocarboxylase (Thiamindiphosphat) sowie etwa 5 % Thiamintriphosphat und Thiamintetraphosphat. Wie in der DE-A-1 085 527 beschrieben, wird das Gemisch üblicherweise dadurch aufgetrennt, daß man zuerst die Phosphorsäure entfernt und dann das Gemisch über einen schwach basischen Ionenaustauscher leitet. Hierbei werden Restmengen an Phosphorsäure eliminiert. Anschließend wird das entsäuerte Gemisch über einen stark sauren Ionenaustauscher wie z.B. Amberlite®IR-120 geleitet, wobei Thiaminmonophosphorsäure haften bleibt, während die Cocarboxylase und die höheren Phosphate, im wesentlichen Thiamintri- und -tetraphosphat, eluiert werden. Bei dieser Verfahrensweise fällt die Cocarboxylase in Form einer sehr verdünnten Lösung an, was nicht unerhebliche Eindampfkosten verursacht. Ferner hydrolysiert ein Teil der Cocarboxylase durch den stark sauren Ionenaustauscher zu Thiaminmonophosphat, wodurch sich die Gesamtausbeute an Cocarboxylase verringert. Anstelle eines stark sauren Ionenaustauscherharzes wird auch ein schwach saures Ionenaustauscherharz wie z.B. Amberlite®IRC-50 verwendet. Hier handelt es sich ebenfalls um einen selektiven Ionenaustauschprozeß, wobei die eluierte Cocarboxylase wieder in stark verdünnter Lösung anfällt.

So wird z.B. in dem Verfahren gemaß GB 793 753 bei Verwendung von Amberlite® IRC 50 für die Auftrennung einer Lösung enthaltend etwa 1 kg Thiaminphosphate eine Trennsäule mit einer Kapazität von 100 bis 300 Litern benötigt, wodurch entsprechend große Mengen an Eluaten anfallen.

Der Erfindung liegt die Aufgabe zugrunde, ein verfahren der eingangs genannten Art so auszugestalten, daß die Abtrennung des Thiaminmonophosphats erheblich besser verläuft. Es soll auch vermieden werden, daß die anfallenden Lösungen von Cocarboxylase stark verdünnt ist.

Diese Aufgabe wird gelöst mit einem Verfahren der eingangs genannten Art, das dadurch gekennzeichnet ist, daß die Lösung, welche das Thiaminmonophosphat und die Cocarboxylase enthält, einen pH von 2 bis 7 aufweist und daß man ein Kationenaustauscherharz verwendet, welches als funktionelle Gruppen Aminomethylen- und/oder Iminodimethylenphosphonsäurereste enthält.

Diese Kationenaustauscher weisen einen pKₐ-Wert von 1,0 bis 4,5 auf.

Unter dem pKₐ-Wert des Kationenaustauschers versteht man den scheinbaren pK-Wert, wie er nach F. Helfferich, Ionenaustauscher, Bd. 1, Seite 84 (1959), Verlag Chemie GmbH, Weinheim, Bergstraße, bestimmt werden kann.

Besonders zweckmäßig verwendet man eine Lösung, die einen pH von 4,5 bis 5,5 aufweist. Zum Eluieren erweist sich wäßrige, 1 bis 30 %ige Salzsäure als besonders geeignet.

Bei den Kationenaustauscherharzen mit Amino- und/,oder Imino methylenphosphonsäuregruppen handelt es sich um Polystyrol/Divinylbenzolpolymerisate, die vorzugsweise eine Amino- und/oder Iminodimethylenphosphonsäuregruppe als funktionelle Gruppe enthalten. Kationenaustauscherharze mit Amino- und/oder Iminoalkylen-, insbesondere mit Amino- und/oder Iminomethylen-phosphonsäure-Gruppen sind bekannt (vgl. z.B. J. Appl. Chem. 8. (1958), 459; US-A 4 002 564; CA 93, 168909x) und im Handel erhältlich. Besonders bewährt hat sich das von der Bayer AG unter der Bezeichnung Lewatit® OC 1060 angebotene Kationenaustauscherharz mit Amino- und/oder Iminodimethylenphosphonsäure-Gruppen.

Die Kationenaustauscherharze mit Amino- und/oder Iminomethylenphosphonsäure-Gruppen zeichnen sich durch eine besonders hohe Selektivität und durch eine bezüglich Thiaminmonophosphat überraschend hohe Kapazität aus. Wird eine Lösung, die die obige Zusammensetzung aufweist und einen pH von 2 bis 7, vorzugsweise 4,5 bis 5,5 hat, über diese Harze geleitet, wird das Thiaminmonophosphat selektiv adsorbiert. Die Cocarboxylase und die höheren Phosphate werden eluiert, wobei überraschenderweise die Konzentration des Eluats mit fortschreitender Elution stetig ansteigt. Es handelt sich hier also nicht um einen klassischen Austauschprozeß, sondern überraschenderweise um eine Displacementchromatographie . Dies hat zur Folge, daß die Konzentration der Cocarboxylase im Eluat gleich ist der Konzentration in der Auftragslösung. Die Cocarboxylase kann aus dem Eluat auf übliche Weise, z.B. durch Eindampfen, gewonnen werden. Die Abtrennung des Thiamintri- und -tetraphosphats von der Cocarboxylase erfolgt nach Methoden des Standes der Technik.

Wenn die Kapazität des Ionenaustauschers erschöpft ist, wird mit Wasser zwischengespült und dann mit 1 bis 30 %iger, wäßriger HCl, vorzugsweise mit 7,5 %iger HCl eluiert: Das Thiaminmonophosphat wird als gesättigte Lösung in Form des Hydrochlorids eluiert. Der Ionenaustauscher ist nach dem Neutralspülen mit Wasser wieder in betriebsfertigem Zustand. Dies ermöglicht in einem technischen Verfahren eine schnelle Abfolge von Trennzyklen. Die Kapazität des Lewatit®OC-1060 wird nur durch den Anteil des Thiaminmonophosphats begrenzt. Für eine optimale Trennung darf diese nicht überschritten werden. Die Kapazität wurde mit ca. 140 g Thiaminmonophosphat/l Harz gefunden. Es kann also erfindungsgemäß eine Lösung von jeder beliebigen Zusammensetzung an Thiamin, Thiaminmonophoshat, Cocarboxylase und höheren Phosphaten wie oben beschrieben aufgetrennt werden, wobei für die Cocarboxylase keine Verdünnung eintritt und die Thiaminmonophosphorsäure bis zu einer Menge von 140 g/l Lewatit®OC-1060 selektiv entfernt wird. Es wurde so ein Gemisch aufgetrennt, in dem die Cocarboxylase bereits auf ca. 37 % angereichert war (siehe nachfolgendes Beispiel).

Das erfindungsgemäße Verfahren ist in vielerlei Weise vorteilhaft. So bleibt beim Reinigungsschritt die Produktkonzentration gleich oder steigt sogar an. Darüber hinaus führt die als Displacer eingesetzte Salzsäure das Ionenaustauscherharz wieder in den Anfangszustand über, so daß eine getrennte Regenerationsstufe entfällt. Das erfindungsgemäße Verfahren ermöglicht außerdem eine für ein technisches Verfahren äußerst wichtige schnelle Abfolge von Trennzyklen. Besonders vorteilhaft ist die Tatsache, daß die Harzkapazität hoch ist und z.B. beim Lewatit®OC-1060 bis zu 140 g Thiaminmonophosphat/l Harz beträgt.

Die Erfindung wird durch das nachfolgende Beispiel weiter erläutert.

### Beispiel

Man trägt 2000 g einer Lösung der nachfolgenden Zusammensetzung mit pH 6 auf eine Trennsäule mit einer Abmessung von 330 x 65 mm auf.

### Zusammensetzung:

| | Gehalt in g | % Anteil d.Trockensubstanz | Konz. in der Lösung |
|---|---|---|---|
| Thiaminmonophosphosphat | 150 | ( 57 %) | 7,5 %ig |
| Cocarboxylase | 95 | ( 36 %) | 4,8 %ig |
| Rest (Thiamintri- und -tetraphosphat) | 18 | ( 7 %) | 0,9 %ig |
| Trockensubstanz | 263 | (100 %) | 13,2 %ige Lösung = 2 000 g Lösung (ca. 2 000 ml) |

### Folgende Volumina wurden aufdosiert:

| | |
|---|---|
| Auftragslösung | 1,8 BV (1 BV = 1 100 ml; BV = Bettvolumen); |
| Wasser | 1,0 BV |
| HCl 7,5 %ig | 0,5 BV |
| Wasser | 2,2 BV |
| Dosiervolumen | 5,5 BV |

### Folgende Fraktionen wurden erhalten:

| | | |
|---|---|---|
| Vorlauf | 0,9 BV | |
| Cocarboxylase | 1,8 BV | 4,8 %ig |
| Monophosphat | 1,0 BV | 13,5 %ig |
| Nachlauf | 1,8 BV | |
| Fraktionsvolumen | 5,5 BV | |

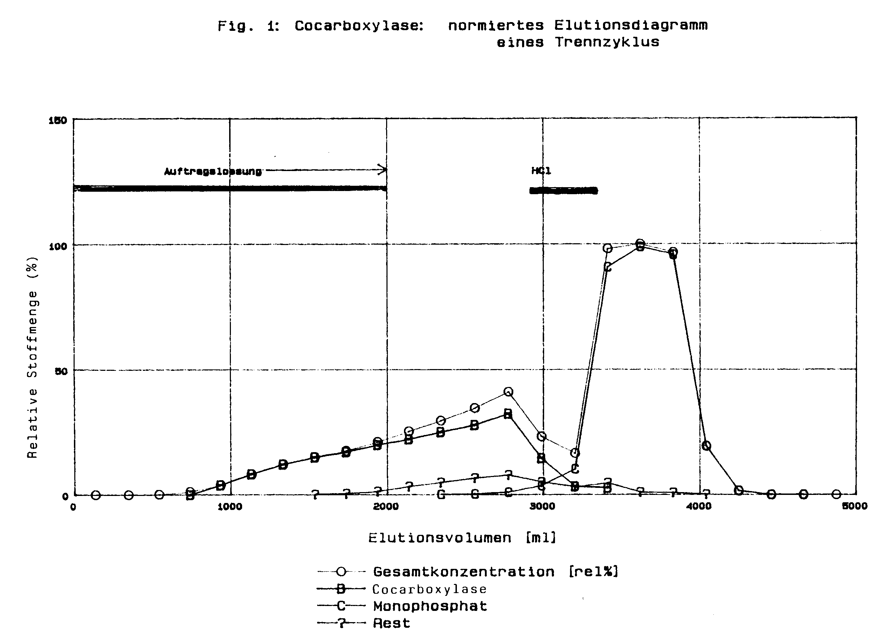

Das erhaltene Ergebnis ist in der Figur 1 graphisch dargestellt. Der Versuch wurde bei ca. 100 % der Kapazität des Lewatit®OC-1060 für Thiaminmonophosphat durchgeführt. Die Figur 1 bedeutet das Elutionsdiagramm der Trennung. Es ist zu ersehen, daß die Konzentration an Cocarboxylase im Eluat entsprechend der Dosierzeit des Gemisches stetig steigt. Das Monophosphat beginnt gegen Ende des Elutionspeak für Cocarboxylase durchzubrechen. Durch Zudosierung von HCl nach einer kurzen Zwischenspülzeit eluiert man das Monophosphat in hoher Reinheit und Konzentration. Der Elutionspeak ist scharf, es findet kein Nachbluten ("Tailing") statt. Nach einer Spülphase mit Wasser kann das nächste Produktgemisch aufdosiert werden.

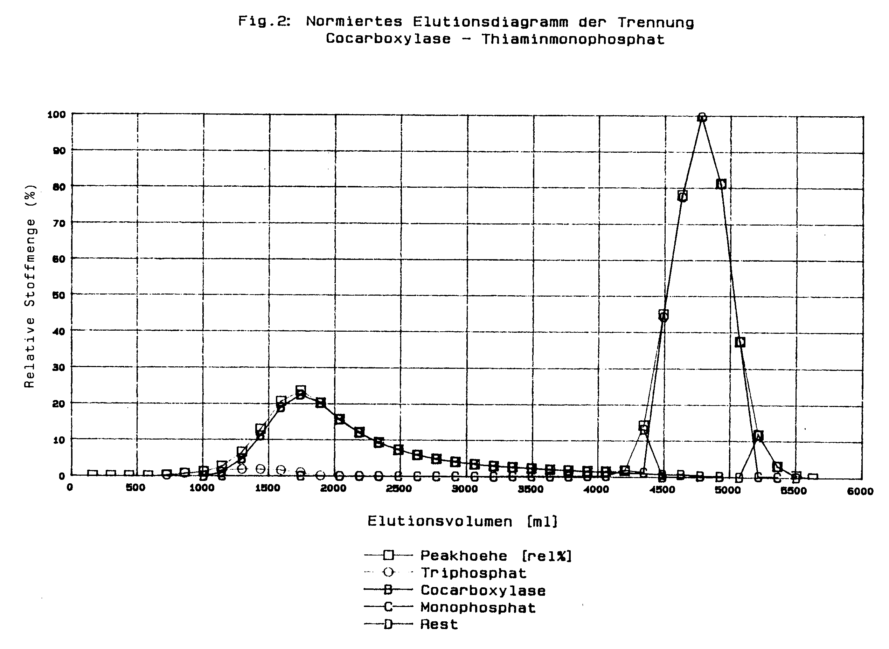

In der Figur 2 ist ebenfalls ein Elutionsdiagramm einer Trennung aufgetragen. Hierbei wurde mit dem selben Harz Levatit®OC1060 gearbeitet. Dieses wurde nur mit 50 % der Kapazität für Thiaminmonophosphat und mit einer Lösung von ca. 20 % Cocarboxylase und 75 % Thiaminmonophosphat beladen. Zwischen der Dosierung der Auftragslösung und dem Eluieren mit HCl wurde mit viel Wasser zwischengespült. Hierbei wurde festgestellt, daß trotz des langen Spülvorgangs das Monophosphat stabil auf dem Harz verbleibt. Die anschließende Elution mit Salzsäure erfolgt schlagartig. Durch das Zwischenspülen mit Wasser läßt sich das Thiaminmonophosphat gut reinigen, und man erhält ein reines Eluat.

## Patentansprüche

1. Verfahren zur Abtrennung von Thiaminmonophosphat aus einer Lösung von Thiaminphosphaten, die das Thiaminmonophosphat und Cocarboxylase enthält, unter Verwendung eines Kationenaustauscherharzes und Eluieren des Thiaminmonophosphats mit wäßriger Salzsäure, dadurch gekennzeichnet, daß man eine Lösung einsetzt, die einen pH-Wert zwischen 2 und 7 aufweist, und ein Kationenaustauscherharz verwendet, welches als funktionelle Gruppen Aminomethylen- und/oder Iminodimethylenphosphonsäurereste enthält.

2. Verfahren nach einem der Ansprüche 1 oder 2, dadurch gekennzeichnet, daß man eine Lösung einsetzt, die einen pH-Wert von 4,5 bis 5,5 aufweist.

3. Verfahren nach einem der Ansprüche 1 oder 2, dadurch gekennzeichnet, daß man als Säure zum Eluieren des Thiaminmonophosphats wäßrige 1 bis 30 %ige Salzsäure verwendet.

## Claims

1. A process for removing thiamine monophosphate from a solution of thiamine phosphates which contains thiamine monophosphate and cocarboxylase using a cation exchanger resin and eluting the thiamine monophosphate with aqueous hydrochloric acid, wherein the solution used has a pH of 2-7 and the cation exchanger resin used contains aminomethylene- and/or imindimethylene-phosphonic acid residues as functional groups.

2. A process as claimed in claim 1, wherein the solution used has a pH of 4.5-5.5.

3. A process as claimed in claim 1 or 2, wherein the acid used for eluting the thiamine monophosphate is aqueous 1-30% strength hydrochloric acid.

## Revendications

1. Procédé pour séparer du monophosphate de thiamine d'une solution de phosphate de thiamine qui contient le monophosphate de thiamine et du cocarboxylase, en utilisant une résine échangeuse de cations et élution du monophosphate de thiamine avec de l'acide chlorhydrique aqueux, caractérisé par le fait que l'on part d'une solution qui présente un pH compris entre 2 et 7 et qu'on utilise une résine échangeuse de cations qui contient, comme groupes fonctionnels, des restes d'acide aminométhylène- et/ou iminodiméthylène-phosphonique.

2. Procédé selon une des revendications 1 ou 2, caractérisé par le fait que l'on part d'une solution qui présente un pH de 4,5 à 5,5.

3. Procédé selon l'une des revendications 1 ou 2, caractérisé par le fait que l'on utilise, comme acide pour éluer le monophosphate de thiamine, de l'acide chlorhydrique aqueux à 1 à 30 %.
